# EUROPEAN PATENT SPECIFICATION

(11) **EP 2 782 453 B1**
(45) Date of publication and mention of the grant of the patent: **27.09.2017**
(21) Application number: 12781325.1
(22) Date of filing: 07.11.2012
(51) Int. Cl.: A21D 2/18, A23C 9/152, A23G 1/00, A23L 2/54, A23G 1/52, A23P 30/40, A23L 29/30, A23L 5/00, A23L 19/00, A23L 19/12, A23L 21/10, A23C 9/13, A23L 2/02, A23L 2/52, A23G 1/56, A23L 19/15

(54) **CARBOHYDRATE RICH FOOD COMPOSITION CONTAINING CYCLODEXTRIN AND METHOD OF MAKING THE SAME**
KOHLENHYDRAT-REICHE LEBENSMITTELZUSAMMENSETZUNG ENTHALTEND CYCLODEXTRIN UND METHODE ZU DEREN HERSTELLUNG
COMPOSITIONS RICHES EN GLUCIDES CONTENANT DE LA CYCLODEXTRINE ET SON PROCÉDÉ DE FABRICATION

(30) Priority: 21.11.2011 US 201113301021
(43) Date of publication of application: 01.10.2014
(73) Proprietor: Wacker Chemie AG, 81737 München (DE)
(72) Inventor: REUSCHER, Helmut, Onsted, Michigan 49265 (US); BAUER, Mark, Adrian, Michigan 49221 (US); GOONETILLEKE, Laknath Anslem, Plymouth, Minnesota 55446 (US); POLCHINSKI, Patrick, Tecumseh, Michigan 49286 (US)
(74) Representative: Potten, Holger
(86) International application number: PCT/EP2012/071976
(87) International publication number: WO 2013/075939

(56) References cited:
- EP-A1- 0 687 414
- EP-A1- 1 738 650
- EP-A2- 0 339 784
- WO-A1-2008/036744
- JP-A- 2011 087 513
- US-A- 3 917 873
- US-A- 4 368 211
- HARDEEP SINGH GUJRAL ET AL: "Effect of Cyclodextrinase on Dough Rheology and Bread Quality from Rice Flour", JOURNAL OF AGRICULTURAL AND FOOD CHEMISTRY, vol. 51, no. 13, 1 June 2003 (2003-06-01), pages 3814-3818, XP055050826, ISSN: 0021-8561, DOI: 10.1021/jf034112w
- DATABASE GNPD [Online] MINTEL; 31 July 2001 (2001-07-31), Mintel: "Silhouette Bio Milk", Database accession no. 105959

## Description

The present invention relates to a method of making a carbohydrate rich food composition comprising an alpha-cyclodextrin. Cyclodextrin has been indicated for use in certain oil or protein rich food products such as whipped cream and beaten egg products to facilitate increase in food volume or overrun. Cyclodextrins are donut-shaped molecules with a hydrophilic exterior and with hydrophobic interior cavities to receive and entrap hydrophobic molecules such as lipids and fats. Many other food products such as fruit sauce or potato paste, on the other hand, are carbohydrate rich and do not contain significant amounts of fats or proteins relative to their carbohydrate contents. Improving the volume increase and reducing caloric intake per given weight of these carbohydrate rich food products remains desirable.

The present invention provides a method according to claim 1 of forming an aerated food composition including a carbohydrate rich food base and an alpha-cyclodextrin mixed with the food base to form the food composition having a volume increase of 15 percent or greater relative to a comparable control composition without the cyclodextrin. The food base may be, for example, an applesauce, fruit juice, puree, or jam, starchy carbohydrate rich food syrups and powders such as dried potatoes and simple carbohydrates like maltodextrins, starch, or sugar.

It has been surprisingly discovered that alpha-cyclodextrins may be used in carbohydrate rich food compositions to increase volume-to-weight ratios, to decrease total calorie intake per given volume and/or to improve mouth-feel satisfaction. This observation is surprising at least in view of the long standing notion that cyclodextrins are generally only useful for hosting hydrophobic molecules such as fatty molecules in increasing product overrun. This observation is further surprising in that the food composition presents a synergistic enhancement in overrun such that a total overrun is greater than a simple sum of the overruns of components in the food composition. A food composition may include a food base having a base carbohydrate-to-protein (base C/P) ratio and a base carbohydrate-to-fat (base C/F) ratio, at least one of the base C/P and C/F ratios being greater than 1; and an alpha-cyclodextrin mixed with the food base to form the food composition with a volume increase of 15 percent or greater relative to a comparable control composition without the cyclodextrin. The carbohydrate rich food base can be modified in texture and/or mouthfeel by the addition of the alpha-cyclodextrin at certain specified weight ratios such that the food composition can be obtained with more pleasant flavor and feel without adding unnecessary calorie-heavy additives.

The food base can be a liquid, a solid, or of any consistency in-between. When being a liquid, the food base can readily accept cyclodextrin for forming a mixture. Non-limiting examples of the food base in liquids or semi-liquids include juices, water extracts and creams. When the raw material for forming the food base is a solid or a semi-solid, the raw material may first be processed to be of reasonably smaller particle sizes, such as in the shape/form of flakes, particles, and/or powders. In this connection, the flakes, particles and powders of the raw material may further be mixed with a suitable liquid to form the food base in a state readily accepting cyclodextrin.

The food composition may take the form of an emulsion, a gel, a foam, or may have a yogurt-like consistency. The food base may be a beverage or a sauce, such as a fruit sauce, fruit juice, fruit puree, fruit jam. The food base may also be powders, flakes, or particles, such as potato powder/flakes, or simple carbohydrate like maltodextrins, starch, or sugar.
In certain instances, the food base includes a fruit sauce. The fruit sauce may be made from one or more fresh or canned fruits via suitable methods including chopping, peeling, steaming, and/or pureeing. Any suitable fruits may be used for making the fruit sauce as the food base. Non-limiting fruit examples include apple, pear, orange, mango, banana, and kiwi.
In certain instances, the food base includes a starchy paste. The starchy paste may be made from one or more starchy foods via suitable methods including chopping, peeling, steaming, and/or pureeing. Potatoes may be used for making the starchy paste as the food base.

The food composition may be in a ready-to-eat form. In this connection, the food composition is ready for packaging, for shelf storage, and/or for human consumption.

The food base and the alpha-cyclodextrin may be combined to form a mix such that the volume of the mix may be increased by whipping and/or beating. Whipping and beating can be carried out in any suitable fashion, via electric food mixers or whisk beaters. The food composition may be kept at a cool temperature lower than room temperature during whipping and/or beating to facilitate volume increase. Optional volume stabilizers and texturizers may be added before, during, and/or after the whipping and beating.
In certain instances, the C/P ratio of the food base and/or the final food composition containing the food base and the cyclodextrin is no less than 1, 1.5, 2, 2.5, 3, 3.5, 4, 4.5 or 5, and no greater than 500, 450, 400, 350, 300, or 250. In certain particular instances, the C/P ratio of the food base is of from 1.5 to 500, 2 to 450, 2.5 to 400, 3 to 350, 3.5 to 300, 4 to 250, 4.5 to 200, 5 to 150, 5.5 to 100, or 6 to 50. In certain other particular instances, the C/P ratio of the food base is of from 1.5 to 50, 2.0 to 75, 2.5 to 100, 3 to 125, 3.5 to 150, 4 to 175, 4.5 to 200, 5 to 225, 5.5 to 250, 6 to 275, 6.5 to 300, 7 to 325, 7.5 to 350, 8 to 375, 8.5 to 400, 9 to 425, 9.5 to 450, or 10 to 500.
In certain instances, the C/F ratio of the food base and/or the final food composition containing the food base and the cyclodextrin is no less than 1, 1.5, 2, 2.5, 3, 3.5, 4, 4.5 or 5, and no greater than 500, 450, 400, 350, 300, or 250. In certain particular instances, the C/F ratio of the food base is of from 1.5 to 500, 2 to 450, 2.5 to 400, 3 to 350, 3.5 to 300, 4 to 250, 4.5 to 200, 5 to 150, 5.5 to 100, or 6 to 50. In certain other particular instances, the C/F ratio of the food base is of from 1.5 to 50, 2.0 to 75, 2.5 to 100, 3 to 125, 3.5 to 150, 4 to 175, 4.5 to 200, 5 to 225, 5.5 to 250, 6 to 275, 6.5 to 300, 7 to 325, 7.5 to 350, 8 to 375, 8.5 to 400, 9 to 425, 9.5 to 450, or 10 to 500.
Although the food base does not categorically exclude ingredients that are not generally for human consumption or not human digestible, the food base according to one or more embodiments of the present invention does not include any appreciable amount of these ingredients, such as cellulosic materials including cellulose and chemically modified celluloses. In certain instances, the food base includes less than 10 wt% (weight percent), 5 wt%, 4 wt%, 3 wt%, 2 wt%, 1 wt%, 0.5 wt%, 0.1 wt%, or 0.05 wt% of cellulosic materials. In those instances, the inclusion of these non-digestible ingredients would rather be incidental and not intended.
Although the food base does not categorically exclude ingredients that are not naturally contained within the raw materials forming the food base in type and/or in amount, the food base does not include any appreciable amount of added fats that are not naturally contained within the food base and are introduced to the food base from an external source. By way of example, the food base is an applesauce processed from apples. In this connection, fats introduced into the applesauce for flavor-enhancement would be considered added fats, as they are not naturally present in the apples.
Although the food base does not categorically exclude ingredients that are not naturally contained within the raw materials forming the food base in type and/or in amount, the food base according to one or more embodiments of the present invention does not include any appreciable amount of added proteins that are not naturally contained within the food base and are introduced to the food base from an external source. By way of example, the food base is an applesauce processed from apples. In this connection, fats and/or proteins introduced into the applesauce for flavor-enhancement would be considered added proteins, as they are not naturally present in the apples. In certain instances, the food base includes less than 10 wt% (weight percent), 5 wt%, 4 wt%, 3 wt%, 2 wt%, 1 wt%, 0.5 wt%, 0.1 wt%, or 0.05 wt% of added proteins. In those instances, the inclusion of the added protein would rather be incidental and not intended.
Cyclodextrins are a family of cyclic polymers of glucose produced by enzymatic digestion of cornstarch with a cyclodextrin glycosyltransferase. Cyclodextrins are cyclic, non-reducing oligosaccharides composed of six, seven or eight glucopyranose units corresponding to alpha-, beta- and gamma-cyclodextrin, respectively. The molecules have a hydrophobic interior and hydrophilic exterior forming an internal pore. The different polymer lengths yield different pore sizes. Cyclodextrins are typically manufactured by the conversion of starch with the enzyme cyclodextrin glycosyltransferase and then separated and purified through various techniques. The food composition includes alpha-cyclodextrin. The food composition includes 1 to 15, 1.5 to 12.5, 2 to 10, 2.5 to 7.5, 1 to 12.5, 1 to 10, 1 to 7.5, 2 to 12.5, 2 to 10, 2 to 7.5, 3 to 12.5, 3 to 10, or 3 to 7.5 percent by weight of alpha-cyclodextrin based on the total dry weight of the food composition.
"Fat" or "fats" refers to a group of compounds that are generally soluble in organic solvents and generally insoluble in water. In certain instances, fats may include fatty acids and derivatives including tri-, di-, and monoglycerides and phospholipids, as well as sterol-containing metabolites such as cholesterol. In certain instances, fats may include glycerides, free fatty acids, or a combination thereof, wherein glycerides may be triacylglycerides, diacyglycerides, derivatives thereof, or their mixtures with each other or in combination with monoacylglycerides. The fatty acid residues may be saturated or unsaturated, or both types may be bonded to a common glycerol backbone. The fatty acids or acid residues of glycerides may include saturated or unsaturated C5 to C25 fatty acids. The unsaturated fatty acids or acid residues of glycerides may be monounsaturated, polyunsaturated, or a combination thereof. Fats may be either solid or liquid at room temperature. Examples of edible animal fats are lard, fish oil, butter and whale blubber. They may be obtained from fats in the milk and meat, as well as from under the skin, of an animal. Examples of edible plant fats include peanut, soya bean, sunflower, sesame, coconut and olive oils, and cocoa butter. Vegetable shortening, used mainly for baking, and margarine, used in baking and as a spread, can be derived from the above oils by hydrogenation.

"Protein" or "proteins" refers to compounds consisting of one or more polypeptides typically folded into a globular or fibrous form. A polypeptide is a single linear polymer chain of amino acids bonded together by peptide bonds between the carboxyl and amino groups. Like other biological macromolecules such as polysaccharides and nucleic acids, proteins are essential parts of organisms.

"Carbohydrates" or "saccharines" refers to compounds generally having the empirical formula C*ₘ*(H₂O)*ₙ*, where *m* could be different from *n*, which consists only of carbon, hydrogen and oxygen, with a hydrogen-to-oxygen atom ratio of 2:1. The carbohydrates or saccharides can be divided into four chemical groupings: monosaccharides, disaccharides, oligosaccharides, and polysaccharides. In general, the monosaccharides and disaccharides are smaller carbohydrates. Blood sugar is a monosaccharide glucose, table sugar is a disaccharide sucrose, and milk sugar is a disaccharide lactose. Monosaccharides may be 6-carbon or 5-carbon. 5-carbon monosaccharides include ribose and deoxyribose. Polysaccharides may include starch, glycogen, cellulose, and chitin. Certain foods may be rich in carbohydrates. For instance, potatoes, wheat, corn, rice, cereals, bread and pasta are rich in polysaccharides starch, and candy, jams and desserts are often rich in simple carbohydrates such as sugar.

Non-limiting examples of the carbohydrates as included in the food composition may include sugars such as sucrose, dextrose, glucose, lactose, maltose, invert sugar, and mixtures thereof, and starches.
Any suitable methods may be used to determine the contents of fat, protein and carbohydrate in the food base or the food composition. Content percentages of carbohydrates, fats, and proteins may be determined using any suitable methods, including methods reported according to American Organization of Analytical Chemists (AOAC). In certain instances, fats may be measured by Gas Chromatography according to AOAC 996.06 which gives saturated and trans fat results as well as a breakdown of all fatty acids. In certain other instances, proteins may be measured by combustion according to AOAC 968.06. In certain other instances, contents for ash and moisture are determined prior to measurement of carbohydrates, wherein ash may be measured according to AOAC 923.03. Total dietary fibers including soluble and insoluble dietary fibers may be determined according to AOAC 991.43. In certain particular instances, available carbohydrates refer to the amount of total carbohydrates minus insoluble fibers. In certain other particular instances, simple sugars may be measured according to AOAC 977.20.
The term "aeration" refers to a process by which gas bubbles and particularly air bubbles are circulated through, mixed with or dissolved in a liquid or substance. Aeration may be carried out by the process of whipping and/or beating. The type of the gas used in aeration is not limited to air or carbon dioxide. Other non-limiting examples of the aeration gases may include nitrogen, oxygen and nitrous oxide. The food composition may be an aerated food composition including gas bubbles. Non-limiting examples of the benefits of aerated foods may include improved texture, enhanced flavor delivery, easier mastication, and altered rheology. The aerated food composition may be a liquid food composition, in the form of edible foams and emulsions. These liquid food compositions may be protein stabilized and are produced according to claim 1. For instance, whipping of low-medium viscosity liquids to entrap air has been used to prepare whipped cream, beaten egg whites, cake batter, milk shakes, frappes, and the like. The term "smoothie" may refer to a liquid or semi-liquid beverage that is blended, chilled, and/or sweetened. The smoothie may be made from fresh fruit and in special cases can contain chocolate or peanut butter. In addition to fruit, many smoothies include crushed ice, frozen fruit, honey or contain syrup and ice ingredients. They have a milkshake-like consistency that is thicker than slush drinks. They can also contain milk, yogurt or ice cream. Add-ins may include milk, whey powder, green tea, herbal supplements, or nutritional supplement mixes. The term "emulsion" refers to a mixture of two or more liquids which are normally immiscible. Emulsions are part of a more general class of two-phase systems of matter called colloids. Although the terms colloid and emulsion are sometimes used interchangeably, *emulsion* is used when both the dispersed and continuous phase are liquid. In an emulsion, one liquid (the dispersed phase) is dispersed in the other (the continuous phase). A volume increase created in the food composition may be characterized as an overrun. This volume increase is 15% or greater than any applicable volume increase in a comparative control composition without the cyclodextrin.

In this connection, the overrun refers to the volume of gas added to a single food composition and may be measured as: [(volume of 100 grams of the food composition after one or more volume-increasing steps) - (volume of 100 grams of the food composition before the one or more volume increasing steps)] x 100/ [volume of 100 grams of the food composition before the one or more volume-increasing steps]. Therefore, the overrun may be presented as a percentage value.
In this connection also, the volume increase between a cyclodextrin and a non-cyclodextrin containing food compositions may be measured as: [(volume of the cyclodextrin containing food composition after one or more volume-increasing steps) - (volume of the same food composition minus the cyclodextrin after the one or more volume-increasing steps)] x 100/ [volume of the same food composition minus the cyclodextrin after the one or more volume-increasing steps].
In certain instances, the volume is a specific volume (SV).
In certain instances, specific volume values may be introduced to assess volume increase. Specific volume as described herein may be characterized as the ratio of a composition's volume to its mass, which is the reciprocal of density. Volume increase may be characterized by determining the SV before and after the volume increasing process, which may be presented as: Volume Increase = (SV2 - SV1) / SV1, wherein SV1 represents initial specific volume or specific volume before volume increasing steps, and SV2 represents final specific volume or specific volume after volume increasing steps.
In one or more embodiments, the term "volume-increasing step" or "volume-increasing steps" refers to method steps by which a maximum volume increase may be created in a given composition. These method steps involve the use of high speed whipping, beating and/or mixing with a maximum energy input allowable under manufacture's recommendation for a suitable period of time, such as 10 to 15 minutes.

It has further been surprisingly found that the food composition may present a synergistic volume increase, optionally when supplemented with at least one additive. The synergistic volume increase refers to that the volume increase in the food composition after whipping and/or beating is greater than the individual sum of the volume increase when using cyclodextrin alone and the volume increase when using the additive alone. A synergistic factor in this connection may be referred to as [(a total volume increase of the food composition including the cyclodextrin and the at least one additive) - (individual sum of the volume increase of the food composition containing the cyclodextrin but not the additive and the volume increase of the food composition containing the at least one additive but not the cyclodextrin. In certain instances, the synergistic factor is 5 to 750 percent, 15 to 400 percent, 25 to 300 percent, 35 to 200 percent, 5 to 50 percent, 50 to 100 percent, 100 to 150 percent, 150 to 200 percent, 200 to 250 percent, 250 to 300 percent, 300 to 350 percent, 350 to 400 percent, 400 to 450 percent, or 450 to 500 percent. Non-limiting examples of the additive include xanthan gum, guar gum, polysorbate 80 (P80), whey protein, carrageenan gum, and hydroxypropylmethylcellulose (HPMC).
In certain particular instances, the food composition includes the food base, alpha-cyclodextrin and whey protein, and presents a synergistic volume increase with a synergistic factor in the range of 70 to 110 percent.
In certain particular instances, the food composition includes the food base, alpha-cyclodextrin and hydroxypropylmethylcellulose, and presents a synergistic volume increase with a synergistic factor in the range of 80 to 120 percent.
In certain particular instances, the food composition includes the food base, alpha-cyclodextrin and polysorbate 80, and presents a synergistic volume increase with a synergistic factor in the range of 80 to 120 percent.
In certain particular instances, the food composition includes the food base, alpha-cyclodextrin and carrageenan gum, and presents a synergistic volume increase with a synergistic factor in the range of 35 to 75 percent.
In certain particular instances, the food composition includes the food base, alpha-cyclodextrin and the polysorbate 80 plus whey protein, and presents a synergistic volume increase with a synergistic factor in the range of 110 to 150 percent.
In certain particular instances, the food composition includes the food base, alpha-cyclodextrin and guar gum, and presents a synergistic volume increase with a synergistic factor in the range of 60 to 100 percent.
In certain particular instances, the food composition includes the food base, alpha-cyclodextrin and xanthan gum, and presents a synergistic volume increase with a synergistic factor in the range of 70 to 110 percent.
In certain instances, a food composition's stability can be evaluated by the rate of drainage. The smaller the drainage rate, the more stable the food composition. The rate of drainage differentiating stable and unstable food compositions also can vary between different aerated food types. The food composition may be further stabilized/modified. Stabilization may be needed as gas bubbles can burst or coalesce if the bubble interface thins excessively. Surface active agents may be used to stabilize aerated food compositions. Emulsifiers and proteins can be surface active, reducing the surface tension at an interface and so alleviating the thermodynamic tendency to minimize the interfacial area. Alternatively, the aerated foods may be stabilized by increasing the viscosity of the continuous phase. Viscosity can be increased by the addition of hydrocolloids, sugar, fibers, or other thickeners.
Non-limiting examples of the protein-based stabilizers/modifiers may include casein, sodium caseinate, soy protein, egg white protein, egg yolk protein, milk whey protein, fish protein, cottonseed protein, sesame protein, meat protein, and the like as well as combinations thereof, and the like.
Non-limiting examples of the non-proteinaceous stabilizers/modifiers include methylcelluloses such as carboxymethylcellulose, hydroxypropyl methylcellulose, ethylcellulose ether, and the like as well as natural and synthetic gums such as gums obtained from seaweeds such as agar, alginic acid, sodium alginate and carrageenan, natural gums produced by bacterial fermentation such as gellan gum and xanthan gum, natural gums obtained from non-marine plant resources such as gum arabic, gum ghatti, gum tragacanth, guar gum, locust bean gum, Beta-glucan from oat or barley bran and glucomannan from the konjac plant and also pectins derived from plant sources and the like as well as mixtures thereof. The food composition may further include an optional additive. Non-limiting examples of the optional additives include flavoring agents, colorants, vitamins, minerals, preservatives, emulsifiers and the like. Suitable flavoring agents can be employed to impart vanilla, cream, chocolate, coffee, maple, spice, mint, butter, caramel, fruit, and other flavors. Additionally, the use of certain polyols such as sorbitol and mannitol can be employed to modify the mouthfeel of the topping. Furthermore, other additives such as emulsifiers and phosphates and the like may be employed for their known functions.
Non-limiting emulsifiers include: polysorbates, hydroxylated lecithin; mono- or diglycerides of fatty acids, such as monostearin and monopalmitin; polyoxyethylene ethers of fatty esters of polyhydric alcohols, such as the polyoxyethylene ethers of sorbitanmonstearate; fatty esters of polyhydric alcohols, such as sorbitanmonostearate; mono- and diesters of glycols and fatty acids, such as propylene glycol monostearate, propylene glycol monopalmitate, succinylatedmonoglycerides; and the esters of carboxylic acids such as lactic, acetic, citric, and tartaric acids with the mono- and diglycerides of fatty acids such as glycerol lacto palmitate and glycerol lacto stearate as well as sodium, potassium, magnesium and calcium salts of fatty acids. The food composition may be an emulsion. In certain instances, the emulsion may be cooled and passed through a whipper for the incorporation of air or an inert gas such as nitrogen, carbon dioxide, nitrous oxide, or the like. The whipper may be of conventional construction such as a Hobart mixer or a Votator heat exchanger that permits cooling of the emulsion during whipping. The emulsion can be whipped to an overrun of from about 75 to about 1000 percent, particularly about 100 to about 750 percent, more particularly about 100 to about 500 percent, packaged, and frozen if desired.

The following examples are presented with a focus on increases in overrun or volume observed with non-limiting examples of the food composition. In this connection, individual overrun values are obtained from comparing specific volume of a composition before and after whipping and/or beating. Specific volume values after the whipping and/or beating are listed. In this connection also, volume increase in specific volume values after whipping and/or beating between a CD-present composition and a CD-absent composition is calculated and reported. Although many exemplary compositions show good or great stability, the stability data is not compiled herein. For these examples, blanks in the tables listed represent that corresponding ingredients are not added or included.

### Example 1 (comparative example)

A whipped applesauce with an overrun of 99% (spec. vol. = 1.709 cm³/g) is prepared by mixing 50 g alpha cyclodextrin (10.3% moisture content) and 2 g polysorbate 80 with 400 g applesauce. To this mixture is added 50 g soy oil. This mixture has a carbohydrate-to-fat ratio of 2.3:1 and a carbohydrate-to-protein ratio of >100:1. The mixture is stirred intensively until maximum volume is achieved, about 10 minutes. Overrun is measured. The same mixture minus the alpha cyclodextrin gives an 8% overrun (spec. vol. - 1.029 cm³/g). This represents a 66% volume increase.

### Example 2 (comparative example)

A whipped applesauce with an overrun of 88% (spec. vol. = 1.618 cm³/g) is prepared by mixing 50 g alpha cyclodextrin (10.3% moisture content) and 1.6 g whey protein with 400 g applesauce. To this mixture is added 50g soy oil. This mixture has a carbohydrate-to-fat ratio of 2.3:1 and a carbohydrate-to-protein ratio of 76:1. The mixture is stirred intensively until maximum volume is achieved, about 10 minutes. Overrun is measured. The same mixture minus the alpha cyclodextrin gives a 13% overrun (spec. vol. = 1.075 cm³/g). This represents a 50% volume increase.

### Example 3 (comparative example)

A whipped Applesauce with an overrun of 91% (spec. vol. = 1.695 cm³/g) is prepared by mixing 35g alpha cyclodextrin (10.3% moisture content) and 2g xanthan gum with 413g applesauce. To this mixture is added 50g soy oil. This mixture has a carbohydrate-to-fat ratio of 2.1:1 and a carbohydrate-to-protein ratio of >100:1. The mixture is stirred intensively until maximum volume is achieved, about 10 minutes. Overrun is measured. The same mixture minus the alpha cyclodextrin gives a 5% overrun (spec. vol. = 1.001 cm³/g). This represents a 69% volume increase.

### Example 4 (comparative example)

A whipped applesauce with an overrun of 79% (spec. vol. = 1.587 cm³/g) is prepared by mixing 35 g alpha cyclodextrin (10.3% moisture content) and 2 g guar gum with 413 g applesauce. To this mixture is added 50g soy oil. This mixture has a carbohydrate-to-fat ratio of 2.1:1 and a carbohydrate-to-protein ratio of >100:1. The mixture is stirred intensively until maximum volume is achieved, about 10 minutes. Overrun is measured. The same mixture minus the alpha cyclodextrin gives a 7% overrun (spec. vol. = 1.709 cm³/g). This represents a 56% volume increase.

### Example 5 (comparative example)

A whipped applesauce with an overrun of 54% (spec. vol. = 1.587 cm³/g) is prepared by mixing 35 g alpha cyclodextrin (10.3% moisture content) and 2 g carrageenan with 413 g applesauce. To this mixture is added 50g soy oil. This mixture has a carbohydrate-to-fat ratio of 2.1:1 and a carbohydrate-to-protein ratio of >100:1. The mixture is stirred intensively until maximum volume is achieved, about 10 minutes. Overrun is measured. The same mixture minus the alpha cyclodextrin gives a 2% overrun (spec. vol. = 1.020 cm³/g). This represents a 56% volume increase. In certain instances, and as shown in the examples, alpha cyclodextrin is used in an amount of 4 to 5 percent by weight.

### Example 6 (comparative example)

A whipped applesauce with an overrun of 61% (spec. vol. = 1.439 cm³/g) is prepared by mixing 35 g alpha cyclodextrin (10.3% moisture content) with 415 g applesauce. To this mixture is added 50 g canola oil. This mixture has a carbohydrate-to-fat ratio of 2.1:1 and a carbohydrate-to-protein ratio of >100:1. The mixture is stirred intensively until maximum volume is achieved, about 10 minutes. Overrun is measured. The same mixture minus the alpha cyclodextrin gives a 4% overrun (spec. vol. = 0.989 cm³/g). This represents a 45% increase in volume.

### Example 7 (comparative example)

A whipped applesauce with an overrun of 73% (spec. vol. = 1.538 cm³/g) is prepared by mixing 35 g alpha cyclodextrin (10.3% moisture content) and 2 g xanthan gum with 413 g applesauce. To this mixture is added 50 g canola oil. This mixture has a carbohydrate-to-fat ratio of 2.1:1 and a carbohydrate-to-protein ratio of >100:1. The mixture is stirred intensively until maximum volume is achieved, about 10 minutes. Overrun is measured. The same mixture minus the alpha cyclodextrin gives a 9% (spec. vol. = 1.042 cm³/g) overrun. This represents a 48% increase in volume.

### Example 8 (comparative example)

A whipped applesauce with an overrun of 97% (spec. vol. = 1.754 cm³/g) is prepared by mixing 35 g alpha cyclodextrin (10.3% moisture content) and 1 g xanthan gum with 414 g applesauce. To this mixture is added 50 g canola oil. This mixture has a carbohydrate-to-fat ratio of 2.1:1 and a carbohydrate-to-protein ratio of >100:1. The mixture is stirred intensively until maximum volume is achieved, about 10 minutes. Overrun is measured. The same mixture minus the alpha cyclodextrin gives a 5% overrun (spec. vol. = 1.042 cm³/g). This represents a 68% increase in volume.

### Example 9

A whipped applesauce with an overrun of 119% (spec. vol. = 2.000 cm³/g) is prepared by mixing 11.3 g alpha cyclodextrin (10.3% moisture content) with 438.8 g applesauce. This mixture has a carbohydrate-to-fat ratio of >100:1 and a carbohydrate-to-protein ratio of >100:1. The mixture is stirred intensively until maximum volume is achieved, about 15 minutes. Overrun is measured. Some variability is seen in overrun values between preparation batches. In general overrun increases with increasing cyclodextrin amount and then begins to decrease. In this example 2.5% cyclodextrin gives an overrun of 119% compared to 144% in Example 10 with 5% cyclodextrin. Applesauce with no alpha cyclodextrin added gives no measurable overrun or less than 0.05% overrun (spec. vol. = 0.885 cm³/g). This represents a 126% volume increase.

### Example 10

A whipped applesauce with an overrun of 144% (spec. vol. = 2.174 cm³/g) is prepared by mixing 22.5 g alpha cyclodextrin (10.3% moisture content) with 427.5 g applesauce. This mixture has a carbohydrate-to-fat ratio of >100:1 and a carbohydrate-to-protein ratio of >100:1. The mixture is stirred intensively for about 10 minutes. Overrun is measured. Applesauce with no alpha cyclodextrin added gives no measurable overrun or less than 0.05% overrun (spec. vol. = 0.885 cm³/g). This represents a 146% volume increase.

### Example 11

A whipped applesauce with an overrun of 152% (spec. vol. = 2.174 cm³/g) is prepared by mixing 35 g alpha cyclodextrin (10.3% moisture content) with 413 g applesauce. This mixture has a carbohydrate-to-fat ratio of >100:1 and a carbohydrate-to-protein ratio of >100:1. The mixture is stirred intensively until maximum volume is achieved, about 15 minutes. Overrun is measured. The composition in Example 11 is that in Example 13 without guar gum added. Applesauce with no alpha cyclodextrin added gives no measurable overrun or less than 0.05% overrun (spec. vol. = 0.885 cm³/g) . This represents a 146% volume increase.

### Example 12

A whipped applesauce with an overrun of 324% (spec. vol. = 3.774cm³/g) is prepared by mixing 22.5 g alpha cyclodextrin (10.3% moisture content) and 1.8 g xanthan gum with 427.5 g applesauce. This mixture has a carbohydrate-to-fat ratio of >100:1 and a carbohydrate-to-protein ratio of >100:1. The mixture is stirred intensively until maximum volume is achieved, about 15 minutes. Overrun is measured. The same mixture minus the alpha cyclodextrin gives a 10% overrun (spec. vol. = 1.031 cm³/g). This represents a 266% volume increase.

### Example 13

A whipped applesauce with an overrun of 251% (spec. vol. = 3.030 cm³/g) is prepared by mixing 35 g alpha cyclodextrin (10.3% moisture content) and 2 g guar gum with 413 g applesauce. This mixture has a carbohydrate-to-fat ratio of >100:1 and a carbohydrate-to-protein ratio of > 100. The mixture is stirred intensively until maximum volume is achieved, about 15 minutes. Overrun is measured. A duplicate composition with the exception that oil is added shows a reduced overrun of 79%. This example shows that added fat/oil may in fact impede overrun generation. The same mixture (non-oil) minus the alpha cyclodextrin gives a 34% overrun (spec. vol. = 1.250 cm³/g). This represents a 142% volume increase.

### Example 14

As shown in Table 1, increasing weight percent from 2.5% to 8% of α-cyclodextrin (10.3% moisture content) in applesauce results in relatively greater overrun. This applesauce composition having 5% α-cyclodextrin, when supplemented with xanthan gum, has an even greater overrun of 324%. This applesauce composition having 8% α-cyclodextrin, when supplemented with guar gum, has an even greater overrun of 251%. In comparison, applesauce with 5% β-cyclodextrin has an overrun of 128%. On the other hand, γ-cyclodextrin only results in significantly less overrun in applesauce.

**Table 1**

| Cyclodextrin Type | Cyclodextrin Weight Percent | Additive | Overrun |
|---|---|---|---|
| α-cyclodextrin | 2.5% | | 119% |
| | 5% | | 144% |
| | | xanthan gum | 324% |
| | 8% | | 152% |
| | | guar gum | 251% |
| β-cyclodextrin | 5% | | 130% |
| γ-cyclodextrin | 5% | | 3% |
| | 10% | | 7% |
| | 10% | whey protein | 12% |

### Example 15

As shown in Table 2, a combined use of cyclodextrin (10.3% moisture content) and one or more of the listed additives results in a synergistic volume increase in whipped applesauce that is greater than the individual sum of using either cyclodextrin or the additive(s) alone. For instance, applesauce with cyclodextrin alone has an overrun of 25%. Applesauce with xanthan gum alone has an overrun of 5%. Applesauce with both cyclodextrin and xanthan gum has an overrun of 91%, which is greater than the individual sum of 25% plus 5%.

**Table 2**

| Food Base | α-cyclodextrin | Additives | | | | |
|---|---|---|---|---|---|---|
| | | P80 | whey protein | xanthan gum | HPMC | Overrun |
| Applesauce | y | | | | | 25% |
| | | y | | | | 8% |
| | y | y | | | | 99% |
| | | | y | | | 13% |
| | y | | y | | | 88% |
| | | | | | y | 34% |
| | y | | | | y | 116% |
| | | | | y | | 5% |
| | y | | | y | | 91% |
| | | y | y | | | 22% |
| | y | y | y | | | 132% |
| Chocolate Syrup | | | | y | | 10% |
| | y | | | y | | 123% |
| Strawberry Syrup | | | | y | | 14% |
| | y | | | y | | 136% |
| Fruit Smoothie | | | | y | | 4% |
| | y | | | y | | 80% |

### Example 16

As shown in Table 3, fruit smoothie with 5% α-cyclodextrin (10.3% moisture content) plus whey presents an overrun of 447%. Maltodextrin with 5% α-cyclodextrin plus whey protein and xanthan gum presents an overrun of 400%.

**Table 3**

| Food Base | Cyclodextrin Type | Cyclodextrin Weight Percent | Additive | Overrun |
|---|---|---|---|---|
| Fruit Smoothie | α-cyclodextrin | 5% | whey protein | 447% |
| Maltodextrin | α-cyclodextrin | 5% | whey protein and xanthan gum | 400% |

### Example 17 (comparative example)

A whipped yogurt with an overrun of 516% (spec. vol. = 6.014 cm³/g) is prepared by mixing 200 g of plain yogurt and 25 g of alpha cyclodextrin (10.3% moisture content). This mixture has a carbohydrate-to-fat ratio of 4.5:1 and a carbohydrate-to-protein ratio of 4.5:1. The mixture is stirred intensively until maximum volume is achieved, about 15 minutes. Overrun is measured. A light foamy product is obtained. Yogurt with no alpha cyclodextrin added gives a 50% overrun (spec. vol. = 1.475 cm³/g). This represents a 308% volume increase.

### Example 18 (comparative example)

A whipped yogurt with an overrun of 454% (spec. vol. = 5.414 cm³/g) is prepared by mixing 200 g of plain yogurt, 25 g of alpha cyclodextrin (10.3% moisture content), and 1.2 g of xanthan gum. This mixture has a carbohydrate-to-fat ratio of 4.7:1 and a carbohydrate-to-protein ratio of 4.7:1. The mixture is stirred intensively until maximum volume is achieved, about 15 minutes. Overrun is measured. A light foamy product is obtained. The same mixture minus the alpha cyclodextrin gives a 103% overrun (spec. vol. = 2.002 cm³/g). This represents a 170% volume increase.

### Example 19 (comparative example)

A whipped yogurt with an overrun of 439% (spec. vol. = 5.286 cm³/g) is prepared by mixing 250 g of plain yogurt, 125 g of water, and 50 g of alpha cyclodextrin (10.3% moisture content). This mixture has a carbohydrate-to-fat ratio of 7.0:1 and a carbohydrate-to-protein ratio of 7.0:1. The mixture is stirred intensively until maximum volume is achieved, about 15 minutes. Overrun is measured. A light foamy product is obtained. The same mixture minus the alpha cyclodextrin gives a 45% overrun (spec. vol. = 1.417 cm³/g). This represents a 272% volume increase.

### Example 20 (comparative example)

A whipped yogurt with an overrun of 212% (spec. vol. = 3.029 cm³/g) is prepared by mixing 250 g of plain yogurt, 125 g of water, 50 g of alpha cyclodextrin (10.3% moisture content), and 100 g of maltodextrin. This mixture has a carbohydrate-to-fat ratio of 17.7:1 and a carbohydrate-to-protein ratio of 17.7:1. The mixture is stirred intensively until maximum volume is achieved, about 15 minutes. Overrun is measured. A light foamy product is obtained. The same mixture minus the alpha cyclodextrin gives a 5% overrun (spec. vol. = 1.017 cm³/g). This represents a 198% volume increase.

### Example 21 (comparative example)

A whipped yogurt with an overrun of 197% (spec. vol. = 2.894 cm³/g) is prepared by mixing 250 g of plain yogurt, 125 g of water, 50 g of alpha cyclodextrin (10.3% moisture content), 100 g of maltodextrin, and 0.4 g xanthan gum. This mixture has a carbohydrate-to-fat ratio of 17.7:1 and a carbohydrate-to-protein ratio of 17.7:1. The mixture is stirred intensively until maximum volume is achieved, about 15 minutes. Overrun is measured. A light foamy product is obtained. The same mixture minus the alpha cyclodextrin gave no overrun but had a spec. vol. of 0.957 cm³/g). This represents a 202% volume increase.

### Example 22 (comparative example)

A whipped yogurt with an overrun of 349% (spec. vol. = 4.401 cm³/g is prepared by mixing 250 g of plain yogurt, 125 g of water, 50 g of alpha cyclodextrin (10.3% moisture content), and 0.4 g of xanthan gum. This mixture has a carbohydrate-to-fat ratio of 7.0:1 and a carbohydrate-to-protein ratio of 7.0:1. The mixture is stirred intensively until maximum volume is achieved, about 15 minutes. Overrun is measured. A light foamy product is obtained. The same mixture minus the alpha cyclodextrin gives a 20% overrun (spec. vol. = 1.231 cm³/g). This represents a 258% volume increase.

### Example 23 (comparative example)

A whipped yogurt with an overrun of 555% (spec. vol. = 6.076 cm³/g) is prepared by mixing 200 g of plain non-fat yogurt and 25 g of alpha cyclodextrin (10.3% moisture content). This mixture has a carbohydrate-to-fat ratio of >100:1 and a carbohydrate-to-protein ratio of 3.7:1. The mixture is stirred intensively until maximum volume is achieved, about 15 minutes. Overrun is measured. A light foamy product is obtained. Non-fat yogurt with no alpha cyclodextrin added gives a 223% overrun (spec. vol. = 3.148 cm³/g). This represents a 93% volume increase.

### Example 24 (comparative example)

A whipped yogurt with an overrun of 385% (spec. vol. = 4.726 cm³/g) is prepared by mixing 200 g of plain non-fat yogurt and 25 g of alpha cyclodextrin (10.3% moisture content), and 1.2 g xanthan gum. This mixture has a carbohydrate-to-fat ratio of >100:1 and a carbohydrate-to-protein ratio of 3.7:1. The mixture is stirred intensively until maximum volume is achieved, about 15 minutes. Overrun is measured. A light foamy product is obtained. The same mixture minus the alpha cyclodextrin gives an 85% overrun (spec. vol. = 1.816 cm³/g). This represents a 160% volume increase.

### Example 25 (comparative example)

Whipped chocolate syrup with an overrun of 73% (spec. vol. = 1.715 cm³/g) is prepared by mixing 7.2 g alpha cyclodextrin (10.3% moisture content), 3.5 g whey protein, 113 g sugar, and 28 g dark cocoa powder with 177 g water. This mixture has a carbohydrate-to-fat ratio of 44.4:1 and a carbohydrate-to-protein ratio of 16.5:1. The mixture is stirred intensively until maximum volume is achieved, about 15 minutes. Overrun is measured. The same mixture minus the alpha cyclodextrin gives no measurable overrun or less than 0.05% overrun (spec. vol. = 0.966 cm³/g). This represents a 78% volume increase.

### Example 26 (comparative example)

Whipped chocolate syrup with an overrun of 502% (spec. vol. = 5.638 cm³/g) is prepared by mixing 15 g alpha cyclodextrin (10.3% moisture content), 3.5 g whey protein, 113 g sugar, and 28 g dark cocoa powder with 177 g water. This mixture has a carbohydrate-to-fat ratio of 46.7:1 and a carbohydrate-to-protein ratio of 17.4:1. The mixture is stirred intensively until maximum volume is achieved, about 15 minutes. Overrun is measured. A foamy chocolate product is obtained. The same mixture minus the alpha cyclodextrin gives no measurable overrun or less than 0.05% overrun (spec. vol. = 0.966 cm³/g). This represents a 484% volume increase. Comparative example 26, in view of the comparative proceeding example 25 and the following comparative example 27, may suggest that there exists at least one optimal weight percent of cyclodextrin to be employed in certain of these carbohydrate-heavy formulations wherein a relatively high overrun value per a given amount of cyclodextrin can be achieved.

### Example 27 (comparative example)

Whipped chocolate syrup with an overrun of 293% (spec. vol. = 5.110 cm³/g) is prepared by mixing 49 g alpha cyclodextrin (10.3% moisture content), 3.5 g whey protein, 113 g sugar, and 28 g dark cocoa powder with 177 g water. This mixture has a carbohydrate-to-fat ratio of 56.5:1 and a carbohydrate-to-protein ratio of 21.0:1. The mixture is stirred intensively until maximum volume is achieved, about 15 minutes. Overrun is measured. A foamy chocolate product is obtained. The same mixture minus the alpha cyclodextrin gives no measurable overrun or less than 0.05% overrun (spec. vol. = 0.966 cm³/g). This represents a 429% volume increase.

### Example 28 (comparative example)

Whipped chocolate syrup with an overrun of 385% (spec. vol. = 4.477 cm³/g) is prepared by mixing 31 g alpha cyclodextrin (10.3% moisture content), 113 g sugar, and 28 g dark cocoa powder with 177 g water. The mixture is stirred intensively until maximum volume is achieved, about 15 minutes. This mixture has a carbohydrate-to-fat ratio of 55.8:1 and a carbohydrate-to-protein ratio of 27.9:1. Overrun is measured. A foamy chocolate product is obtained. For this example, it seems skipping additives such as guar gum may result in a relatively higher overrun. The same mixture minus the alpha cyclodextrin gives no measurable overrun or less than 0.05% overrun (spec. vol. = 0.925 cm³/g). This represents a 384% volume increase.

### Example 29 (comparative example)

Whipped chocolate syrup with an overrun of 112% (spec. vol. = 2.388 cm³/g) is prepared by mixing 31 g alpha cyclodextrin (10.3% moisture content), 1.5 g xanthan gum, 113 g sugar, and 28 g of dark cocoa powder with 177 g of water. This mixture has a carbohydrate-to-fat ratio of 56.1:1 and a carbohydrate-to-protein ratio of 28.1:1. The mixture is stirred intensively until maximum volume is achieved, about 15 minutes. Overrun is measured. A chocolate pudding-like product is obtained. The same mixture minus the alpha cyclodextrin gives no measurable overrun or less than 0.05% overrun (spec. vol. = 0.925 cm³/g). This represents a 158% volume increase.

### Example 30 (comparative example)

Whipped chocolate syrup with an overrun of 379% (spec. vol. = 4.365 cm³/g) is prepared by mixing 31 g alpha cyclodextrin (10.3% moisture content), 3.6 g whey protein, 113 g sugar, and 28 g of dark cocoa powder with 177 g of water. This mixture has a carbohydrate-to-fat ratio of 51.2:1 and a carbohydrate-to-protein ratio of 18.9:1. The mixture is stirred intensively until maximum volume is achieved, about 15 minutes. Overrun is measured. A chocolate mousse-like product with a strong cocoa flavor is obtained. The same mixture minus the alpha cyclodextrin gives no measurable overrun or less than 0.05% overrun (spec. vol. = 0.966 cm³/g). This represents a 352% volume increase.

### Example 31 (comparative example)

Whipped chocolate syrup with an overrun of 419% (spec. vol. = 5.533 cm³/g) is prepared by mixing 15 g alpha cyclodextrin (10.3% moisture content), 3.5 g whey protein, and 28 g dark cocoa powder with 177 g water. This mixture has a carbohydrate-to-fat ratio of 10.0:1 and a carbohydrate-to-protein ratio of 3.7:1. The mixture is stirred intensively until maximum volume is achieved, about 15 minutes. Overrun is measured. A foamy cocoa flavored product is obtained. Contrary to comparative Example 4, no sugar is used in the formulation of this example. This example shows that the cocoa powder can still be aerated without the sugar. However, the sugar in comparative Example 31 helps with the production of a thicker and more structured product. The same mixture minus the alpha cyclodextrin gives no measurable overrun or less than 0.05% overrun (spec. vol. = 1.030 cm³/g). This represents a 437% volume increase.

### Example 32 (comparative example)

Whipped chocolate syrup with an overrun of 106% (spec. vol. = 1.527 cm³/g) is prepared by mixing 18.6 g alpha cyclodextrin (10.3% moisture content) with 220 g chocolate syrup. To this mixture is added 26.6 g soy oil. This mixture has a carbohydrate-to-fat ratio of 1.6:1 and a carbohydrate-to-protein ratio of 10.2:1. The mixture is stirred intensively until maximum volume is achieved, about 10 minutes. Overrun is measured. The same mixture minus the alpha cyclodextrin gives a 19% overrun (spec. vol. = 0.946cm³/g). This represents a 61% volume increase.

### Example 33 (comparative example)

Whipped chocolate syrup with an overrun of 123% (spec. vol. = 1.653 cm³/g) is prepared by mixing 18.6 g alpha cyclodextrin (10.3% moisture content) and 1.1 g xanthan gum with 220 g chocolate syrup. To this mixture is added 26.6 g soy oil. This mixture has a carbohydrate--to-fat ratio of 1.6:1 and a carbohydrate-to-protein ratio of 10.2:1. The mixture is stirred intensively until maximum volume is achieved, about 10 minutes. Overrun is measured. The same mixture minus the alpha cyclodextrin gives a 10% overrun (spec. vol. = 0.877 cm³/g) . This represents an 88% volume increase.

### Example 34 (comparative example)

As shown in Table 4a, cocoa powder supplemented with α-cyclodextrin (10.3% moisture content) and whey protein results in a composition of chocolate mousse with a volume increase of about 379%. The cocoa powder supplemented with α-cyclodextrin and xanthan gum results in a composition of chocolate pudding with a volume increase of about 112%. Table 4b shows percentages in the chocolate mousse of fats, proteins and carbohydrates. Table 4c shows percentages in the chocolate pudding of fats, proteins and carbohydrates. Blanks in the tables represent that corresponding ingredients are not added or included.

**Table 4a**

| Food Base | α-Cyclodextrin | Whey protein | Xanthan gum | Overrun |
|---|---|---|---|---|
| Cocoa Powder | y | | | 385% |
| | y | y | | 379%*^{04a1} |
| | | | y | Not measurable |
| | y | | y | 112%*^{04a2} |

A further comparison of the composition with the overrun of 379% referenced in Table 4a is tabulated in Table 4b. As can be seen from Table 4b, a sample of commercially available chocolate syrup has, per cup, 627 calories, 30g fats, 96g carbohydrates and 4.5g proteins. The composition of "04a1" referenced in Table 4a (without whipping and/or beating) has, per cup, 409 calories, 2g fats, 118g carbohydrates and 6g proteins. After whipping and/or beating, the composition of "04a1" referenced in Table 4a has, per cup, 84 calories, 0.5g fats, 24g carbohydrates and 1g proteins.

**Table 4b**

| Content Percentages Per cup | Chocolate Syrup (before whipping or beating) | Chocolate Mousse "04a1" (before whipping or beating) | Chocolate Mousse "04a1" (after whipping and/or beating) |
|---|---|---|---|
| Calories | 627 cal. | 409 cal. | 84 cal |
| Fats | 30 g | 2 g | 0.5 g |
| Carbohydrates | 96 g | 118g | 24 g |
| proteins | 4.5 g | 6g | 1 g |

A further comparison of the composition with the overrun of 112% referenced in Table 4a is tabulated in Table 4c. As can be seen from Table 4c, a sample of commercially available chocolate syrup has, per cup, 627 calories, 30g fats, 96g carbohydrates and 4.5g proteins. The composition of "04a2" referenced in Table 4a (without whipping and/or beating) has, per cup, 327 calories, 2g fats, 96g carbohydrates and 3.5g proteins. After whipping and/or beating, the composition of "04a2" referenced in Table 4a has, per cup, 154 calories, 1g fats, 45g carbohydrates and 1.5g proteins.

**Table 4c**

| Content Percentages Per cup | Chocolate Syrup (before whipping or beating) | Chocolate Pudding "04a2" (before whipping or beating) | Chocolate Pudding "04a2" (after whipping and/or beating) |
|---|---|---|---|
| Calories | 627 cal. | 327 cal. | 154 cal. |
| Fats | 30 g | 2g | 19 |
| Carbohydrates | 96 g | 96g | 45g |
| proteins | 4.5 g | 3.5g | 1.5g |

### Example 35

Whipped instant potatoes with an overrun of 48% (spec. vol. = 1.535 cm³/g) are prepared by mixing 28 g alpha cyclodextrin (10.3% moisture content) and 3 g salt in 315 g water. The mixture is heated to boiling then removed from the heat source. 80 g water and 72 g of a commercial brand dried potatoes are added. The mixture is allowed to hydrate for 30 seconds then stirred intensively until maximum volume is achieved, about 15 minutes. Overrun is measured. This mixture has a carbohydrate-to-fat ratio of >100:1 and a carbohydrate-to-protein ratio of 13.5:1. A thick dry product with an odd taste is prepared. The same mixture minus the alpha cyclodextrin gives a 24% overrun (spec. vol. = 1.309 cm³/g). This represents a 17% volume increase.

### Example 36

Whipped instant potatoes with an overrun of 107% (spec. vol. = 2.355 cm³/g) are prepared by mixing 28 g alpha cyclodextrin (10.3% moisture content), 3 g salt, and 5 g whey protein in 315 g water. The mixture is heated to boiling then removed from the heat source. 80 g water and 72 g of a commercial brand dried potatoes are added. The mixture is allowed to hydrate for 30 seconds then stirred intensively until maximum volume is achieved, about 15 minutes. Overrun is measured. This mixture has a carbohydrate-to-fat ratio of 237.5:1 and a carbohydrate-to-protein ratio of 8.5:1. A light creamy product with a bland taste is prepared. The same mixture minus the alpha cyclodextrin gives a 66% overrun (spec. vol. = 1.711 cm³/g). This represents a 38% volume increase.

### Example 37

As shown in Table 5a, potato powder supplemented with α-cyclodextrin (10.3% moisture content) and xanthan gum results in a composition of whipping potato with a volume increase of 107%. Table 5b shows content percentages in the whipped potato compared to the potato composition without cyclodextrin or whey.

**Table 5a**

| Food Base | α-Cyclodextrin | Whey | Overrun |
|---|---|---|---|
| Potato Powder | | y | 66% |
| | y | | 48% |
| | y | y | 107%*^{05a} |

A further comparison of the composition "05a" with the overrun of 107% referenced in Table 5a is tabulated in Table 5b. As can be seen from Table 5b, a sample of commercially available mixed potato has, per cup, 133 calories, 6g fats, 16g carbohydrates and 2g proteins. The composition of "05a" referenced in Table 5a (without whipping and/or beating) has, per cup, 97 calories, 0g fats, 24g carbohydrates and 3g proteins. After whipping and/or beating, the composition of "05a" referenced in Table 5a has, per cup, 46 calories, 0g fats, 11g carbohydrates and 1g proteins.

**Table 5b**

| Content Percentages Per cup | Mixed potato (before whipping or beating) | Mixed potato "05a" (after whipping and/or beating) | Mixed potato *05a (before whipping and/or beating) |
|---|---|---|---|
| Calories | 133 cal. | 46 cal. | 97 cal. |
| Fats | 6 g | 0 g | 0g |
| Carbohydrates | 16 g | 11 g | 24g |
| proteins | 2 g | 1 g | 3g |

### Example 38 (comparative example)

A whipped strawberry jam was prepared by mixing 35 g alpha cyclodextrin (10.3% moisture content) with 413 g of a commercial brand strawberry jam. To this mixture is added 50 g soy oil. This mixture has a carbohydrate-to-fat ratio of 6.1:1 and a carbohydrate-to-protein ratio of >100:1. The mixture is stirred intensively until maximum volume is achieved, about 10 minutes. Overrun was measured at 66% (spec. vol. = 1.205 cm³/g). The same mixture minus the alpha cyclodextrin gives a 10% overrun (spec. vol. = 0.853 cm³/g). This represents a 41% volume increase.

### Example 39 (comparative example)

A whipped strawberry jam with an overrun of 136% (spec. vol. = 1.706 cm³/g) is prepared by mixing 35 g alpha cyclodextrin (10.3% moisture content) and 2 g xanthan gum with 413 g of a commercial brand strawberry jam. To this mixture is added 26.6g soy oil. This mixture has a carbohydrate-to-fat ratio of 6.1:1 and a carbohydrate-to-protein ratio of >100:1. The mixture is stirred intensively until maximum volume is achieved, about 10 minutes. Overrun is measured. The same mixture minus the alpha cyclodextrin gives a 14% overrun (spec. vol. = 0.885 cm³/g). This represents a 93% volume increase.

### Example 40 (comparative example)

A whipped fruit drink with an overrun of 80% (spec. vol. = 1.639 cm³/g) is prepared by mixing 35 g alpha cyclodextrin (10.3% moisture content) and 2 g xanthan gum with 413 g of a commercial brand fruit drink. To this mixture is added 50 g soy oil. This mixture has a carbohydrate-to-fat ratio of 1.1:1 and a carbohydrate-to-protein ratio of 16.5:1. The mixture is stirred intensively until maximum volume is achieved, about 10 minutes. Overrun is measured. The same mixture minus the alpha cyclodextrin gave a 4% overrun (spec. vol. = 1.020 cm³/g). This represents a 61% increase in volume.

### Example 41 (comparative example)

Whipped chocolate syrup with an overrun of 190% (spec. vol. = 2.199 cm³/g) is prepared by mixing 16 g alpha cyclodextrin (10.3% moisture content) with 210 g of a commercial brand chocolate syrup. The mixture is stirred intensively until maximum volume is achieved, about 10 minutes. This mixture has a carbohydrate-to-fat ratio of >100:1 and a carbohydrate-to-protein ratio of 7:1. The same mixture minus the alpha cyclodextrin gives no measurable overrun or less than 0.05% overrun (spec. vol. = 0.758 cm³/g). This represents a 190% volume increase. Product labeling for the chocolate syrup indicates less than 2% by weight of xanthan gum and polysorbate 60.

### Example 42

Whipped Maltodextrin with an overrun of 400% (20% increase in overrun over non-CD formulation) (spec. vol. = 3.4965 cm³/g) is prepared by mixing 50 g alpha cyclodextrin (10.3% moisture content) with 125 g Maltodextrin and 325g water. Also added are 5 g whey protein and 2 g xanthan gum. The mixture is stirred vigorously until maximum volume is achieved, about 10 minutes. This mixture has a carbohydrate-to-fat ratio of 42:1 and a carbohydrate-to-protein ratio of 4:1. The same mixture minus the alpha cyclodextrin gives a 333% overrun (spec. vol. = 3.0303cm³/g). This represents a 15.4% increase in volume.

### Example 43 (Comparative Example)

Whipped Applesauce with an overrun of 128% (spec. vol. = 2.024 cm³/g) is prepared by mixing 22.5 g beta cyclodextrin (10.6% moisture content) with 427.5 g of a commercial brand applesauce. The mixture is stirred vigorously until a noticeable volume increase is achieved, about 5 minutes. This mixture has a carbohydrate-to-fat ratio of >100:1 and a carbohydrate-to-protein ratio of >100:1. Applesauce treated to the same conditions without the cyclodextrin gives no measurable overrun or less than 0.05% overrun (spec. vol. = 0.885cm³/g). This represents a 129% volume increase.

### Example 44

A whipped strawberry jam with an overrun of 143% (spec. vol. = 1.795 cm³/g) is prepared by mixing 35 g alpha cyclodextrin (10.3% moisture content) with 415 g of a commercial brand strawberry jam. This mixture has a carbohydrate-to-fat ratio of >100:1 and a carbohydrate-to-protein ratio of >100:1. The mixture is stirred intensively until maximum volume is achieved, about 25 minutes. The same mixture minus the alpha cyclodextrin gives a 33% overrun (spec. vol. = 0.986 cm³/g). This represents an 82% increase in volume.

### Example 45 (comparative example)

Whipped chocolate syrup with an overrun of 222% (spec. vol. = 3.898 cm³/g) is prepared by mixing 15g alpha cyclodextrin, 20 g non-fat milk powder, 113 g sugar, 0.5 g xanthan gum, and 25 g of cocoa powder with 165 g of water. This mixture has a carbohydrate-to-fat ratio of 61.1:1 and a carbohydrate-to-protein ratio of 12.8:1. The mixture is stirred intensively until maximum volume is achieved, about 15 minutes. Overrun is measured. A chocolate mousse-like product with a cocoa flavor is obtained. The same mixture minus the alpha cyclodextrin gives a 32% overrun (spec. vol. = 1.630 cm³/g). This represents a 139% volume increase.

### Example 46 (comparative example)

A whipped yogurt with an overrun of 325% (spec. vol. = 4.301 cm³/g) is prepared by mixing 200 g of plain yogurt, 13.4 g of alpha cyclodextrin, 25 g of powdered sugar, and 1 g of xanthan gum. This mixture has a carbohydrate-to-fat ratio of 6.7:1 and a carbohydrate-to-protein ratio of 6.7:1. The mixture is stirred intensively until maximum volume is achieved, about 15 minutes. Overrun is measured. A light foamy product is obtained. The same mixture minus the alpha cyclodextrin gives a 62% overrun (spec. vol. = 1.636 cm³/g). This represents a 163% volume increase.

### Example 47

A whipped raspberry fruit and sugar with an overrun of 400% (spec. vol. = 4.4638 cm³/g) is prepared by mixing 15 g alpha cyclodextrin (10.3% moisture content) with 100g water, 60 g of pureed raspberries, 100g sugar, 2g whey protein and 1g xanthan gum. This mixture has a carbohydrate-to-fat ratio of 230:1 and a carbohydrate-to-protein ratio of 16:1. The mixture is stirred intensively until good volume increase is achieved, about 10 minutes. The same mixture minus the alpha cyclodextrin gives a 181% overrun (spec. vol. = 2.5061 cm³/g). This represents a 78% increase in volume.

### Example 48

A carbohydrate base with an overrun of 580% (spec. vol. = 5.7422 cm³/g) is prepared by mixing 15 g alpha cyclodextrin (10.3% moisture content) with 100g water, 100g sugar, 2g whey protein and 1g xanthan gum. This mixture has a carbohydrate-to-fat ratio of 799:1 and a carbohydrate-to-protein ratio of 76:1. The mixture is stirred intensively until maximum volume is achieved, about 10 minutes. The same mixture minus the alpha cyclodextrin gives a 483% overrun (spec. vol. = 4.9288 cm³/g). This represents a 17% increase in volume.

While the best mode for carrying out the invention has been described in detail, those familiar with the art to which this invention relates will recognize various alternative designs and embodiments for practicing the invention as defined by the following claims.

## Claims

1. A method of forming an areated food composition, comprising:
forming a base food composition including a food base and a cyclodextrin, the food base being free of any appreciable amount of added fats that are not naturally contained within the food base and are introduced to the food base from an external source and being selected of the group consisting of fruits, potatoes, simple carbohydrates and combinations thereof having a carbohydrate-to-protein (C/P) ratio and a carbohydrate-to-fat (C/F) ratio, at least one of the C/P and C/F ratios being greater than 1, the base food composition having a base volume; and
subjecting the base food composition to a volume-increasing step via at least one of whipping and beating the base food composition to form the food composition having a composition volume, the composition volume being at least 15 percent greater than the base volume wherein if the food base includes a fruit sauce or a potato paste the forming step includes pureeing one or more fruits to generate the fruit sauce or wherein the forming step includes pureeing one or more potatoes to generate the potato paste and wherein the cyclodextrin is of 1 to 15 percent by weight based on the total weight of the food base and wherein the cyclodextrin is an alpha-cyclodextrin.

## Patentansprüche

1. Verfahren zum Herstellen einer lufthaltigen Lebensmittelzusammensetzung, umfassend:
Bilden einer Lebensmittelbasiszusammensetzung, die eine Lebensmittelbasis und ein Cyclodextrin enthält, wobei die Lebensmittelbasis frei von jeder nennenswerten Menge von zugegebenen Fetten ist, die nicht natürlich in der Lebensmittelbasis enthalten sind und aus einer externen Quelle in die Lebensmittelbasis eingeführt sind, und ausgewählt ist aus der Gruppe bestehend aus Früchten, Kartoffeln, einfachen Kohlenhydraten und Kombinationen davon mit einem Kohlenhydrat-zu-Protein (C/P)-Verhältnis und einem Kohlenhydrat-zu-Fett(C/F)-Verhältnis, wobei wenigstens eines der C/P- und C/F-Verhältnisse größer als 1 ist, wobei die Lebensmittelbasiszusammensetzung ein Basisvolumen aufweist; und
Unterwerfen der Lebensmittelbasiszusammensetzung an einen volumenerhöhenden Schritt über wenigstens eines von Aufschäumen und Schlagen der Lebensmittelbasiszusammensetzung, um die Lebensmittelzusammensetzung mit einem Zusammensetzungsvolumen zu bilden, wobei das Zusammensetzungsvolumen wenigstens 15 Prozent größer als das Basisvolumen ist, wobei, wenn die Lebensmittelbasis eine Fruchtsauce oder eine Kartoffelpaste enthält, der Schritt des Bildens Pürieren einer oder mehrerer Früchte zum Herstellen der Fruchtsauce umfasst, oder wobei der Schritt des Bildens Pürieren einer oder mehrerer Kartoffeln zum Herstellen der Kartoffelpaste umfasst, und wobei das Cyclodextrin 1 bis 15 Gewichtsprozent bezogen auf das Gesamtgewicht der Lebensmittelbasis darstellt und wobei das Cyclodextrin ein alpha-Cyclodextrin ist.

## Revendications

1. Méthode de formation d'une composition alimentaire aérée, comprenant :
la formation d'une composition alimentaire de base comportant une base alimentaire et une cyclodextrine, la base alimentaire étant dépourvue de toute quantité appréciable de matières grasses ajoutées qui ne sont pas contenues naturellement au sein de la base alimentaire et sont introduites dans la base alimentaire à partir d'une source externe et étant choisie dans le groupe constitué par les fruits, les pommes de terre, les glucides simples et des combinaisons de ceux-ci, ayant un rapport glucide-protéine (G/P) et un rapport glucide-matière grasse (G/MG), au moins l'un parmi les rapports G/P et G/MG étant supérieur à 1, la composition alimentaire de base ayant un volume de base ; et
la soumission de la composition alimentaire de base à une étape d'augmentation de volume via au moins l'un parmi le fouettage et le battage de la composition alimentaire de base afin de former la composition alimentaire ayant un volume de composition, le volume de composition étant au moins 15% supérieur au volume de base, où, si la base alimentaire comporte une sauce aux fruits ou une pâte de pommes de terre, l'étape de mise en forme comporte la mise en purée d'un ou plusieurs fruits afin de générer la sauce aux fruits, ou où l'étape de mise en forme comporte la mise en purée d'une ou plusieurs pommes de terre afin de générer la pâte de pommes de terre, et où la cyclodextrine constitue de 1 à 15% en poids sur la base du poids total de la base alimentaire et où la cyclodextrine est une alpha-cyclodextrine.
